# EUROPÄISCHE PATENTSCHRIFT

(11) **EP 1 217 137 B1**
(45) Veröffentlichungstag und Bekanntmachung des Hinweises auf die Patenterteilung: **17.05.2006**
(21) Anmeldenummer: 01123415.0
(22) Anmeldetag: 28.09.2001
(51) Int. Cl.: E04B 1/76, B28D 1/04

(54) **Abstandshalter für die Befestigung eines Bauteils an einer eine Dämmschicht aufweisenden Wand oder dgl., sowie Verfahren und Werkzeug zum Setzen des Abstandshalters**
Spacer for connecting a building element to a wall with an exterior insulating layer or similar, method and tool for installing the spacer
Espaceur pour la fixation d'un élément de construction sur un mur muni d'une couche d'isolation extérieure ou similaire, méthode et outil de mise en place de l'espaceur

(30) Priorität: 22.12.2000 DE 10064679
(43) Veröffentlichungstag der Anmeldung: 26.06.2002
(73) Patentinhaber: fischerwerke Artur Fischer GmbH & Co. KG, 72178 Waldachtal (DE)
(72) Erfinder: Semmler, Markus, 79312 Emmendingen (DE); Berg, Ralph, 79112 Freiburg (DE); Frischmann, Albert, 79341 Kenzingen (DE)

(56) Entgegenhaltungen:
- EP-A- 0 517 667
- EP-A- 0 870 561
- EP-A- 0 919 674
- WO-A-00/09284
- WO-A-95/33899
- CH-A- 666 310
- DE-A- 10 022 540
- DE-C- 4 126 825
- DE-U- 29 509 418
- US-A- 5 015 128

## Beschreibung

Die Erfindung betrifft einen Abstandshalter für die Befestigung eines Bauteils an einer eine Dämmschicht aufweisenden Wand oder dgl. gemäß dem Oberbegriff des Anspruchs 1. Des weiteren betrifft die Erfindung ein Verfahren zum Setzen eines derartigen Abstandshalters gemäß dem Oberbegriff des Anspruchs 6 oder 10.

Zum Wärmeschutz von Gebäuden werden deren Wände mit einer Dämmschicht an der Außenseite versehen, die eine Dicke von mehreren Zentimetern aufweisen kann. Da die Dämmschicht eine geringe mechanische Festigkeit aufweist, bereitet die Befestigung von Bauteilen wie Außenlampen, Geländer, Handläufe, Markisen, Jalousien an der Außenseite der Wand Probleme, insbesondere wenn es sich um schwere und/oder belastbare Bauteile wie Geländer und Handläufe handelt.

Zur Befestigung von Bauteilen an einer eine Dämmschicht aufweisenden Wand oder dgl. schlägt die DE 196 36 447 C1 ein Montageteil vor, das aus einem Wärmedämmkörper aus wärmedämmendem Material besteht, in den ein Versteifungselement, beispielsweise eine Armierung, eingebettet ist. Der Wärmedämmkörper kann beispielsweise aus einem PUR-Schaum bestehen, das Versteifungselement kann ein Blechformteil sein. In der Dämmschicht der Wand wird eine Ausnehmung von der Größe des Montageteils angebracht, in die das Montageteil eingesetzt wird. Im Bereich der Ausnehmung für das Montageteil wird die Dämmschicht vollständig entfernt. Das Montageteil wird in die Ausnehmung der Dämmschicht eingesetzt, es sitzt unmittelbar auf einem unter der Dämmschicht befindlichen Mauerwerk oder dgl. der Wand auf. Mittels einer Schraube oder dergleichen Befestigungselement, die durch das Versteifungselement des Montageteils durchgesteckt wird, wird das Montageteil unmittelbar an dem unter der Dämmschicht befindlichen Mauerwerk befestigt. Das zu befestigende Bauteil wird mit dem Versteifungselement des Montageteils beispielsweise verschraubt.

Das bekannte Montageteil hat den Nachteil, dass eine vergleichsweise große Ausnehmung in der Dämmschicht angebracht werden muss. Des Weiteren ist das Montageteil aufwendig in der Herstellung, da das Versteifungselement beispielsweise aus Blech geformt und in das wärmedämmende Material eingebettet werden muss. Darüber hinaus müssen beispielsweise Schraubenlöcher des Versteifungselements deckungsgleich mit Durchstecklöchern im zu befestigenden Bauteil sein.

Weiterhin ist aus der Druckschrift CH 666 310 A5 ein Abstandshalter in Form eines länglichen, U-förmigen Trägers bekannt. An diesem Träger sind mehrere rohrförmige Hülsen angebracht. Sie sind senkrecht zur Wandoberfläche ausgerichtet und stehen mit ihrer der Wand zugewandten Stirnseite auf der Wand auf. Auf dieser Stirnseite weisen sie einen nach innen gerichteten Kragen auf, der der Befestigung der Hülse mit einer Schraube an der Wand dient. An der entgegengesetzten Seite ist die Hülse offen und mit dem Träger verbunden. Durch die Öffnung hindurch können die Schrauben zur Befestigung an der Wand ein- bzw. ausgeschraubt werden. Die Befestigung eines Bauteils erfolgt über eine an den Träger angebrachte Konsole. Der vorgeschlagene Abstandshalter hat den Nachteil, dass die Befestigung sehr aufwendig ist. Zum Einen müssen in den Dämmstoff sowohl Längsschlitze für den Träger als auch kreisförmige Ausnehmungen für die rohrförmigen Hülsen geschaffen werden, zum Anderen ist der Aufbau mit mehreren Hülsen, dem Träger und den Konsolen für die Befestigung des Bauteils an sich sehr aufwendig.

Aus der Druckschrift DE 295 09 418 U1 ist ein weiterer Abstandshalter bekannt, der aus zwei rotationssymmetrischen, ineinander schraubbaren Bauteilen besteht, welche eine Regulierung des Abstands des zu befestigenden Gegenstandes zur Wand erlauben. Die Befestigung an sich erfolgt über eine den Befestigungsgegenstand und den Abstandshalter durchsetzende und in der Wand verankerte Gewindestange. Nachteilig an der vorgeschlagenen Anordnung ist jedoch, dass die beiden ineinander schraubbaren Bauteile eine große kreisförmige Ausnehmung in der Dämmschicht voraussetzen. Dies ist nicht nur aufwendig bei der Montage, sondern vermindert auch die isolierenden Eigenschaften der Dämmschicht.

Der Erfindung liegt die Aufgabe zu Grunde, einen Abstandshalter für die Befestigung eines Bauteils an einer eine Dämmschicht aufweisenden Wand oder dgl. vorzuschlagen, der einfach und preisgünstig herstellbar ist und der eine einfache Anpassung an unterschiedliche, zu befestigende Bauteile ermöglicht. Weitere Aufgaben der Erfindung sind ein Verfahren zum Setzten des Abstandshalters in die Dämmschicht der Wand vorzuschlagen.

Diese Aufgabe wird erfindungsgemäß durch die Merkmale der Ansprüche 1, oder 6 gelöst. Der erfindungsgemäße Abstandshalter mit den Merkmalen des Anspruchs 1 weist ein Rohr mit einer Befestigungseinrichtung zum Befestigen des Abstandshalters an einem unter oder hinter der Dämmschicht der Wand befindlichen Mauerwerk und zum Befestigen des zu befestigenden Bauteils an dem Abstandshalter auf. Die Befestigungseinrichtung ist erfindungsgemäß an einem bauteilseitigen und somit mauerwerksfernen Ende des Abstandshalters angeordnet. Der erfindungsgemäße Abstandshalter ist also hohl ausgebildet, wobei seine Höhlung zum Mauerwerk hin offen ist. Dadurch ist es möglich, das Rohr des Abstandshalters in einen in der Dämmschicht der Wand angebrachten Schlitz einzusetzen, wobei eine Form des Schlitzes einem Querschnitt des Rohrs des Abstandshalters entspricht. Ein Dämmschichtkern verbleibt innerhalb des Rohrs des Abstandshalters, die Dämmschicht bleibt also innerhalb des Rohrs des Abstandshalters erhalten. Eine Isolierwirkung der Dämmschicht bleibt nahezu vollständig erhalten, insbesondere wenn das Rohr des Abstandshalters aus einem thermisch schlecht leitenden Material hergestellt ist. Das Rohr sitzt über seinen gesamten Umfang mit seinem vorderen Stirnrand unmittelbar auf dem Mauerwerk der Wand auf, so dass eine stabile und belastbare Befestigungsmöglichkeit besteht. Der erfindungsgemäße Abstandshalter ist einfach und preisgünstig auch in unterschiedlichen Längen für unterschiedlich dicke Dämmschichten herstellbar. Ein zu entfernendes Dämmschichtvolumen ist gering, da lediglich ein Schlitz in der Dämmschicht angebracht werden muss.

Das Rohr des erfindungsgemäßen Abstandshalters kann eine beliebige Querschnittsform aufweisen, beispielsweise eckig sein. In diesem Fall wird der Schlitz für das Rohr in der Dämmschicht beispielsweise mit einem scheibenförmigen Trennwerkzeug wie einer Trennscheibe oder einer Kreissäge in der Querschnittsform des Rohrs in der Dämmschicht angebracht. Eine bevorzugte Ausgestaltung der Erfindung sieht einen kreisringförmigen Querschnitt des Abstandshalters vor. Der in der Dämmschicht der Wand anzubringende Schlitz weist in diesem Fall eine Kreisform auf und wird beispielsweise mittels eines Kreisbohrers in der Dämmschicht angebracht. Diese Ausgestaltung der Erfindung ermöglicht ein einfaches Setzen des Abstandshalters in die Dämmschicht der Wand.

Als Befestigungseinrichtung sieht eine Ausgestaltung der Erfindung einen Deckel vor, der an einem bauteilseitigen und mauerwerksfernen Ende des Abstandshalters angeordnet ist. Zur Befestigung des Abstandshalters an der Wand wird beispielsweise eine Schraube durch den Deckel und den im Abstandshalter verbliebenen Dämmschichtkern durchgesteckt und beispielsweise in einen in das Mauerwerk eingesetzten Dübel eingeschraubt. Mit der Schraube wird der erfindungsgemäße Abstandshalter gegen das Mauerwerk der die Dämmschicht aufweisenden Wand gespannt. Das zu befestigende Bauteil wird mit dem Deckel des Abstandshalters verbunden, beispielsweise verschraubt.

Eine Weiterbildung der Erfindung sieht eine Wabenstruktur des Deckels vor, die vorzugsweise an dessen dem Mauerwerk zugewandter Innenseite ausgebildet ist. Die Wabenstruktur bietet eine große Anzahl an Einschraubpositionen für Befestigungsschrauben und gibt den Befestigungsschrauben guten Halt im Deckel.

Eine Ausgestaltung der Erfindung sieht zwei oder mehr zueinander parallele Rohre des Abstandshalters vor, die an ihren mauerwerksfernen Enden miteinander verbunden sind. Die Rohre des Abstandshalters werden wie beschrieben in die Dämmschicht der Wand eingesetzt und mit dem darunter befindlichen Mauerwerk verspannt. Diese Ausgestaltung der Erfindung weist eine hohe mechanische Stabilität auf und ist hoch belastbar.

Ein Werkzeug zum Setzen des kreisrohrförmigen Abstandshalters in die Dämmschicht der Wand oder dgl. weist eine Schneide auf, die mit radialem Abstand von einer Drehachse des Werkzeugs angeordnet ist. Durch drehenden Antrieb des Werkzeugs um seine Drehachse wird die Schneide zu einer Kreisbewegung um die Drehachse angetrieben, so dass ein kreisförmiger Schlitz in der Dämmschicht anbringbar ist. Dies ermöglicht ein einfaches Herstellen des zum Setzen des Abstandshalters erforderlichen Schlitzes in der Dämmschicht, zum drehenden Antrieb des Werkzeugs kann beispielsweise eine herkömmliche Bohrmaschine verwendet werden. Des Weiteren ist das zu entfernende Dämmschichtvolumen gering.

Bei einer Ausgestaltung der Erfindung ist das Werkzeug kreisrohrförmig ausgebildet und weist mindestens eine Schneide an einem vorderen Stirnrand auf. Vorzugsweise ist der vordere Stirnrand des kreisrohrförmigen Werkzeugs sägezahnförmig ausgebildet, wobei jeder Sägezahn eine Schneide bildet. Der vordere Stirnrand des kreisrohrförmigen Werkzeugs kann zur Ausbildung der Schneide beispielsweise auch hartmetallbestückt sein.

Eine Weiterbildung des Werkzeugs sieht eine zweite Schneide vor, die zurückversetzt gegenüber der mindestens einen Schneide des Werkzeugs angeordnet ist. Die zweite Schneide ist beispielsweise radial verlaufend angeordnet, sie überstreicht beim drehenden Antrieb des Werkzeugs eine Kreisfläche innerhalb eines von der einen Schneide beim drehenden Antrieb des Werkzeugs beschriebenen Kreises. Es können auch mehrere zweite Schneiden vorgesehen sein, die beispielsweise sternförmig angeordnet sind. Die zweite Schneide kann beispielsweise auch als Raspel mit Raspelzähnen ausgebildet sein. Die zweite Schneide des erfindungsgemäßen Werkzeugs dient dazu, eine Ansenkung innerhalb des kreisringförmigen, von der einen Schneide des Werkzeugs hergestellten Schlitzes in einem auf der Dämmschicht der Wand aufgebrachten Putz und/oder in einer Oberfläche der Dämmschicht anzubringen. In der mit der zweiten Schneide des erfindungsgemäßen Werkzeugs hergestellten Ansenkung liegt der Deckel des erfindungsgemäßen Abstandshalters ein, wenn der Abstandshalter in die Dämmschicht eingesetzt ist. Der Abstandshalter lässt sich dadurch bündig oder auch versenkt in die Dämmschicht der Wand setzen.

Der axiale Abstand zwischen der zweiten Schneide und der einen Schneide des erfindungsgemäßen Werkzeugs ist bei einer Ausgestaltung der Erfindung einstellbar. Dadurch ist das Werkzeug an unterschiedliche Dämmschichtdicken anpassbar

Gemäß dem erfindungsgemäßen Verfahren mit den Merkmalen des Anspruchs 6 wird zum Befestigen des kreisrohrförmigen Abstandshalters vorzugsweise mit dem beschriebenem Werkzeug ein kreisringförmiger Schlitz in der Dämmschicht einer Wand angebracht, der bis zu einem unter der Dämmschicht befindlichen Mauerwerk oder dgl. der Wand reicht. Der kreisrohrförmige Abstandshalter wird in den Schlitz in der Dämmschicht eingesetzt und der Abstandshalter wird mit einem Zuganker mit dem Mauerwerk verbunden. Der Zuganker kann beispielsweise eine Schraube sein, die in einen in das Mauerwerk der Wand gesetzten Dübel eingeschraubt wird. Der Zuganker greift an einem mauerwerksfernen, also bauteilseitigen Ende des Abstandshalters an. Auf diese Weise lässt sich der Abstandshalter stabil am Mauerwerk der Wand befestigen ohne dass ein Dämmschichtkern innerhalb des Abstandshalters entfernt werden muss.

Vorzugsweise wird der kreisringförmige Schlitz ein Stück weit in das Mauerwerk hinein fortgesetzt. Dies hat den Vorteil, dass auch bei einer unebenen Oberfläche des unter der Dämmschicht befindlichen Mauerwerks eine definierte Anlagefläche für den Abstandshalter am Grund des Schlitzes hergestellt wird. Das Rohr des Abstandshalters liegt über seinem gesamten Umfang mit seinem vorderen Stirnrand am Grund des Schlitzes im Mauerwerk an. Der die Anlagefläche für den Abstandshalter bildende Grund des Schlitzes befindet sich exakt in einer Radialebene zum kreisringförmigen Schlitz.

Die Dämmschicht bzw. ein auf die Dämmschicht aufgebrachter Putz wird bei einer Ausgestaltung des erfindungsgemäßen Verfahrens mit einer Ansenkung versehen, in der der Deckel des Abstandshalters vorzugsweise bündig oder versenkt zu einer Oberfläche der Dämmschicht einliegt.

Die Erfindung wird nachfolgend anhand in der Zeichnung dargestellter Ausführungsbeispiele näher erläutert. Es zeigen:
- Figur 1: einen erfindungsgemäßen Abstandshalter in Explosionsdarstellung;
- Figur 2: einen Deckel des Abstandshalters aus Figur 1 in Ansicht von innen;
- Figur 3: ein Werkzeug zum Setzen des Abstandshalters aus Figur 1;
- Figur 4: einen Fräser des Werkzeugs aus Figur 3;
- Figur 5: eine weitere Darstellung des Abstandshalters aus Figur 1; und
- Figur 6: ein zweites Ausführungsbeispiel eines erfindungsgemäßen Abstandshalters.

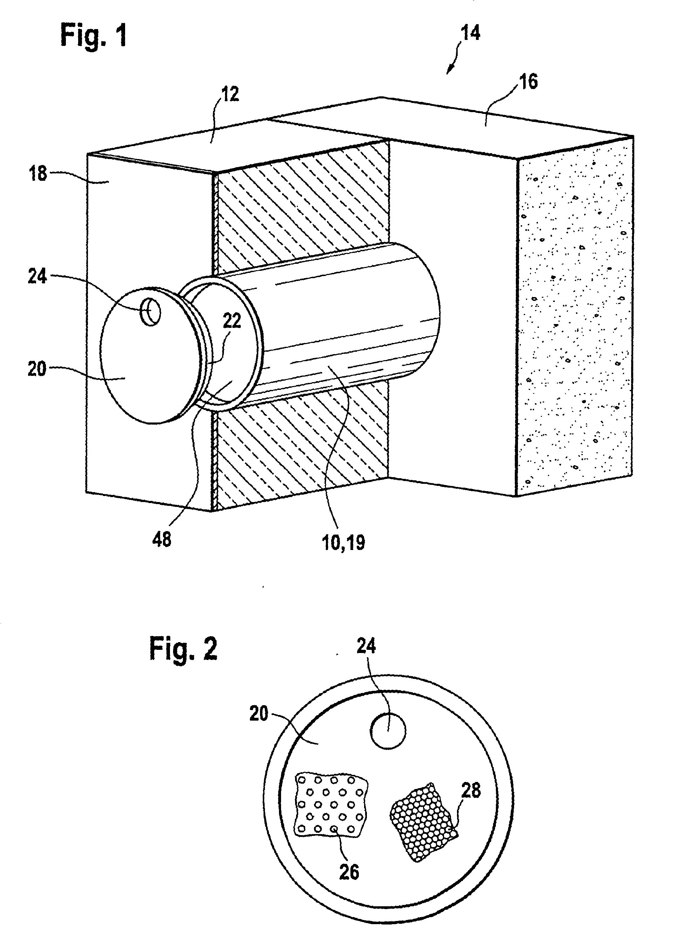

Der in Figur 1 dargestellte, erfindungsgemäße Abstandshalter 10 dient zum Befestigen eines nicht dargestellten Bauteils an einer eine Dämmschicht 12 aufweisenden Wand 14. Das nicht dargestellte, zu befestigende Bauteil kann beispielsweise eine Lampe, ein Geländer, ein Handlauf, eine Markise oder dgl. sein. Die Wand 14 weist ein Mauerwerk 16 auf, auf dessen Außenseite die Dämmschicht 12 und auf dieser wiederum ein Putz 18 aufgebracht ist. Das Mauerwerk 16 kann beispielsweise auch eine Betonwand sein.

Der Abstandshalter 10 weist ein Rohr 19 auf, das in Abhängigkeit von Gewicht und möglicher Belastung des zu befestigenden Bauteils beispielsweise aus Kunststoff oder aus Metall (Stahl) bestehen kann. Vorzugsweise besteht das Rohr 19 aus einem thermisch isolierenden oder schlecht wärmeleitenden Material wie Kunststoff oder Edelstahl. Zum Herabsetzen der Wärmeleitung kann das Rohr 19 beispielsweise aus Lochblech bestehen.

Das Rohr 19 weist keinerlei Einbauten oder nach außen abstehende Elemente auf. Das Rohr 19 ist kreisförmig. An seinem mauerwerksfernen und bauteilseitigen Ende weist das Rohr 19 einen Deckel 20 auf, der auf das Stirnende des Rohrs 19 aufsetzbar ist und zur Zentrierung am Rohr 19 mit einem Bund 22 in das Ende des Rohrs 19 eingreift. Der Deckel 20 bildet eine Befestigungseinrichtung sowohl für den Abstandshalter 10 am Mauerwerk 16 der Wand 14 als auch zur Befestigung des nicht dargestellten Bauteils am Abstandshalter 10.

Der Deckel 20 weist ein Durchsteckloch 24 zum Durchstecken eines in Figur 1 nicht dargestellten Zugankers zum Verbinden des Abstandshalters 10 mit dem Mauerwerk 16 auf. Das Durchsteckloch 24 ist nahe einem Rand des Deckels 20 angeordnet, der Deckel 20 wird vorzugsweise so ausgerichtet, dass sich das Durchsteckloch 24 wie in Figur 1 dargestellt oben befindet. Wie die in Figur 2 dargestellte Innenansicht des Deckels 20 zeigt, kann dieser mit einer Lochung 26 oder einer Wabenstruktur 28 zum Eindrehen einer oder mehrerer Schrauben zur Befestigung des Bauteils am Abstandshalter 10 ausgebildet sein.

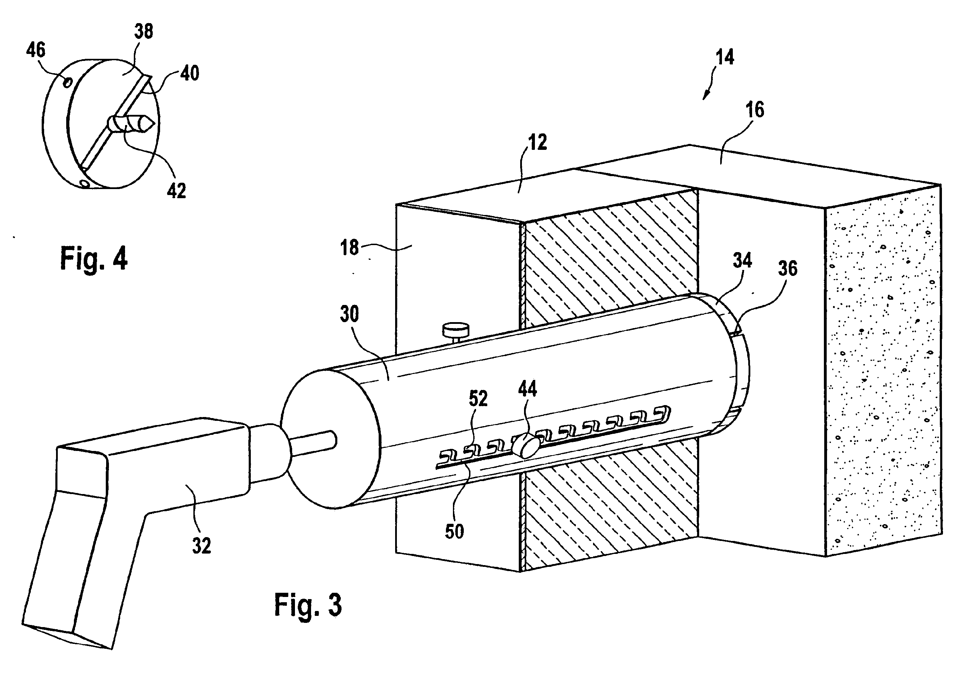

Zum Setzen des erfindungsgemäßen Ankers 10 dient das in Figur 3 dargestellte, Werkzeug 30. Das Werkzeug 30 ist als kreisrohrförmiges Bohrwerkzeug ausgebildet, das beispielsweise mit einer Bohrmaschine 32 drehbar antreibbar ist. An einem vorderen Stirnrand weist das rohrförmige Werkzeug 30 eine kreisringförmige Bohrkrone 34 mit rechteckförmigen Schneidelementen auf, deren in Drehrichtung vordere Ränder Schneiden 36 des Werkzeugs 30 bilden.

Zum Setzen des Abstandshalters 10 wird mit dem drehend angetriebenen Werkzeug 30 ein kreisringförmiger Schlitz durch den Putz 18 und die Dämmschicht 12 hindurch bis in das Mauerwerk 16 gebohrt. Der kreisringförmige Schlitz wird bis in das Mauerwerk 16 hineingebohrt, so dass eine definierte Anlagefläche für das Rohr 19 des Abstandhalters 10 am Grund des kreisringförmigen Schlitzes im Mauerwerk 16 hergestellt wird. Durch das Bohren bis in das Mauerwerk 16 hinein ist die Anlagefläche für das Rohr 12 unabhängig von eventuellen Oberflächenunebenheiten des Mauerwerks 16 und befindet sich immer in einer Radialebene zum gebohrten, kreisringförmigen Schlitz.

Im Werkzeug 30 liegt der in Figur 4 dargestellte Stirnfräser 38 ein. Der Stirnfräser 38 hat die Form einer Zylinderscheibe und weist zwei einander gegenüberliegend angeordnete, radial verlaufende Schneiden 40 auf. In seiner Mitte weist der Fräser 38 einen Zentrierbohrer 42 auf.

Der Stirnfräser 38 ist mit radial angeordneten Klemmschrauben 44 (Figur 3) im Werkzeug 30 befestigt, die eine Wand des Werkzeugs 30 durchgreifen und in radiale Schraublöcher 46 im Umfang des Stirnfräsers 38 eingeschraubt sind. Der Stirnfräser 38 ist gegenüber der Bohrkrone 34 axial zurückversetzt, die Schneiden 40 des Stirnfräsers 38 bilden zweite Schneiden 40 des Werkzeugs 30, die gegenüber den Schneiden 36 der Bohrkrone 34 axial zurückversetzt sind. Die Schneiden 40 tragen beim Bohren des kreisringförmigen Schlitzes in die Dämmschicht 12 den Putz 18 und eventuell ein axial niedriges Stück der Dämmschicht 12 innerhalb des Werkzeugs 30 ab. Es wird dadurch eine Ansenkung im Putz 18 und eventuell der Dämmschicht 12 hergestellt, in der der Deckel 20 des Abstandshalters 10 nach dem Setzen des Abstandshalters 10 einliegt. Dadurch ist es möglich, den Abstandshalter 10 mit einem bündig zur Oberfläche des Putzes 18 abschließenden Deckel 20 in die Dämmschicht 12 zu setzen. Innerhalb des Abstandshalters 10 bleibt ein Dämmschichtkern 48 (Figur 1) bestehen.

Die Schneiden 40 des Stirnfräsers 38 können auch anders angeordnet sein, wesentlich ist, dass der Stirnfräser (38) eine Ansenkung innerhalb des mit dem Werkzeug (30) hergestellten kreisringförmigen Schlitzes herstellt. Anstelle des Stirnfräsers (38) kann beispielsweise auch eine zylindrische Raspelscheibe mit einer Vielzahl an Zähnen anstelle der Schneiden 40 Verwendung finden (nicht dargestellt).

Zum Durchstecken der Klemmschrauben 44 ist das rohrförmige Werkzeug 30 mit in Längsrichtung verlaufenden Schlitzen 50 versehen, von denen hakenförmige Schlitze 52 abzweigen. Die hakenförmigen Schlitze 52 sind mit axialem Abstand voneinander angeordnet. Die Längsschlitze 50 ermöglichen bei gelockerten Klemmschrauben 44, den Stirnfräser 38 im Werkzeug 30 axial zu verschieben und dadurch einen axialen Abstand der zweiten Schneiden 40 von den Schneiden 36 der Rohrkrone 34 an eine Dicke der Dämmschicht 12 anzupassen. Nach dem Einstellen des axialen Abstands der zweiten Schneiden 40 von den Schneiden 36 der Bohrkrone 34 werden die Klemmschrauben 44 in einen der hakenförmigen Schlitze 52 hinein verschoben und durch Festziehen festgeklemmt. Auf diese Weise wird der Stirnfräser 38 in einem eingestellten axialen Abstand von der Bohrkrone 34 im Werkzeug 30 befestigt.

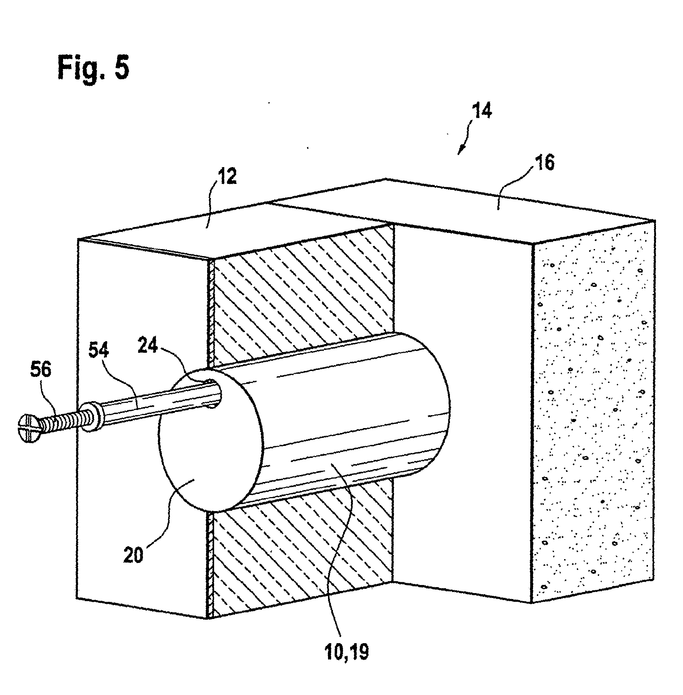

Nach der Herstellung des kreisringförmigen Schlitzes in der Dämmschicht 12 einschließlich der Ansenkung für den Deckel 20 des Abstandshalters 10 wird das Werkzeug 30 aus der Dämmschicht heraus gezogen. Das Rohr 19 des Abstandshalters 10 wird in den kreisringförmigen Schlitz in der Dämmschicht 12 eingesetzt und der Deckel 20 wird auf das mauerwerksferne, bauteilseitige Ende des Rohrs 19 aufgesetzt (Figur 5). Der Deckel 20 wird so gedreht, dass sich das Durchsteckloch 24 oben befindet. Durch das Durchsteckloch 24 hindurch wird ein Loch durch den Dämmschichtkern 48 (Figur 1) innerhalb des Rohrs 19 bis in das Mauerwerk 16 gebohrt. Anschließend wird ein an sich bekannter Spreizdübel 54 zur Durchsteckmontage durch das Durchsteckloch 24 und den Dämmschichtkern 48 bis in das Mauerwerk 16 eingebracht. In den Spreizdübel 54 wird eine Spreizschraube 56 eingeschraubt, die den Spreizdübel 54 in an sich bekannter Weise im Mauerwerk 16 aufspreizt und verankert. Die Spreizschraube 56 bildet einen Zuganker, die an dem mauerwerksfernen und bauteilseitigen Deckel 20 angreift und den Abstandshalter 10 gegen das Mauerwerk 16 spannt. Der Abstandhalter 10 ist stabil mit dem Mauerwerk 16 der Wand 14 verbunden und es lässt sich ein schweres und belastbares Bauteil am Deckel 20 des Abstandhalters 10 befestigen.

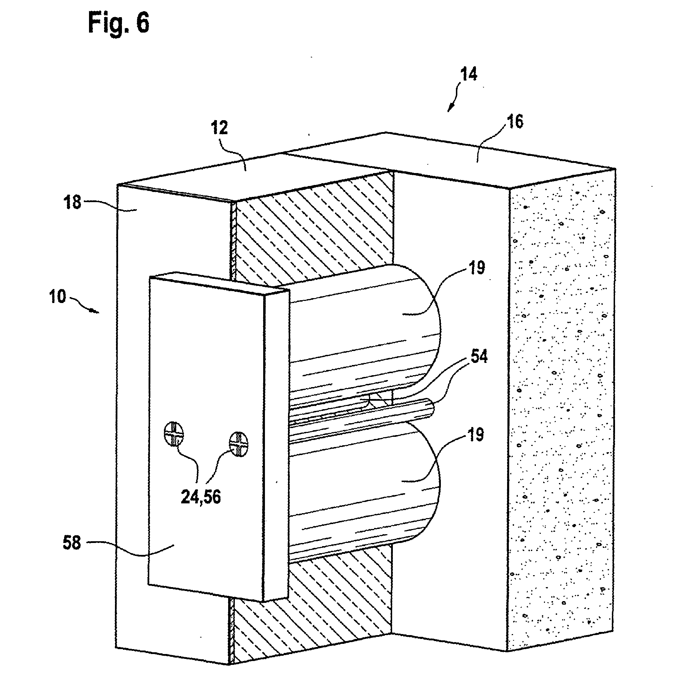

Der in Figur 6 dargestellte, erfindungsgemäße Abstandshalter 10 weist zwei Rohre 19 auf, die an ihren mauerwerksfernen Enden durch einen rechteckförmigen Deckel 58 miteinander verbunden sind. Das Setzen des Abstandshalters 10 aus Figur 6 erfolgt wie vorstehend zu Figuren 1 bis 5 beschrieben. Es werden mit dem Werkzeug 30 zwei kreisringförmige Schlitze in der Dämmschicht 12 der Wand 14 angebracht, in die der Abstandshalter 10 mit seinen beiden Rohren 19 eingesetzt wird. Der Deckel 58 sitzt außen auf dem Putz 18 auf, er ist nicht versenkt. Zur Verankerung mit dem Mauerwerk 16 weist der Deckel 58 zwei Durchstecklöcher 24 auf, die außerhalb der beiden Rohre 19 zwischen diesen angeordnet sind. Die Verankerung des Abstandshalters 10 am Mauerwerk 16 erfolgt mit Spreizdübeln 54 und Spreizschrauben 56, die außerhalb der beiden Rohre 19 angeordnet sind. Der Abstandshalter 10 aus Figur 6 weist durch seine Ausbildung mit zwei Rohren 19 eine erhöhte Stabilität und Tragfähigkeit auf. Der Deckel 58 kann mit Löchern oder Gewindebohrungen zur Befestigung eines nicht dargestellten Bauteils versehen sein oder werden.

## Patentansprüche

1. Abstandshalter (10) für die Befestigung eines Bauteils an einer eine Dämmschicht (12) aufweisenden Wand (14), wobei der Abstandshalter (10) ein Rohr (19) mit einer Befestigungseinrichtung (20; 58) zum Befestigen des Abstandshalters (10) an einem Mauerwerk (16) der Wand (14) aufweist, und wobei die Befestigungseinrichtung (20; 58) an einem mauerwerksfernen Ende des Abstandshalters (10) angeordnet ist und das Rohr des Abstandshalters über seinem gesamten Umfang mit seinem vorderen Stirnrand am Grund eines Schlitzes im Mauerwerk anliegen kann, **dadurch gekennzeichnet, dass** die Befestigungseinrichtung (20, 58) zum Befestigen des Bauteils dienen kann.

2. Abstandshalter nach Anspruch 1, **dadurch gekennzeichnet, dass** das Rohr (19) einen kreisringförmigen Querschnitt aufweist.

3. Abstandhalter nach Anspruch 1, **dadurch gekennzeichnet, dass** die Befestigungseinrichtung (20, 58) einen Deckel aufweist, der an dem bauteilseitigen Ende des Abstandshalters (10) angeordnet ist.

4. Abstandshalter nach Anspruch 3, **dadurch gekennzeichnet, dass** der Deckel (20) eine Wabenstruktur (28) aufweist.

5. Abstandshalter nach Anspruch 1, **dadurch gekennzeichnet, dass** der Abstandhalter (10) zwei oder mehr zu einander parallel angeordnete Rohre (19) aufweist, die an ihren mauerwerksfernen Enden miteinander verbunden sind.

6. Verfahren zum Befestigen eines kreisrohrförmigen Abstandshalters (10) gemäß einem der Ansprüche 1 bis 5 an einem Mauerwerk (16) einer eine Dämmschicht (12) aufweisenden Wand (14), **dadurch gekennzeichnet, dass** ein kreisringförmiger Schlitz bis zum Mauerwerk (16) reichend in der Dämmschicht (12) angebracht wird, dass der kreisrohrförmige Abstandshalter (10) in den Schlitz in der Dämmschicht (12) eingesetzt wird, und dass der Abstandshalter (10) mit einem Zuganker (56) mit dem Mauerwerk (16) verbunden wird, wobei der Zuganker (56) an einem mauerwerksfernen Ende des Abstandshalters (10) angreift.

7. Verfahren nach Anspruch 10, **dadurch gekennzeichnet, dass** der kreisringförmige Schlitz bis in das Mauerwerk (16) hinein fortgesetzt wird.

8. Verfahren nach Anspruch 10, **dadurch gekennzeichnet, dass** die Dämmschicht (12) bzw. ein auf die Dämmschicht (12) aufgebrachter Putz (18) mit einer Ansenkung versehen wird, in der ein an einem mauerwerksfernen Ende des Abstandshalters (10) angeordneter Deckel (20) zu liegen kommt.

## Claims

1. Spacer (10) for fastening a component to a wall (14) provided with an insulating layer (12), the spacer (10) comprising a tube (19) having a fastening device (20; 58) for fastening the spacer (10) to masonry (16) of the wall (14), and the fastening device (20; 58) being arranged at that end of the spacer (10) which is remote from the masonry, and it being possible for the front end face of the tube of the spacer to be in contact over its entire periphery with the bottom of a channel in the masonry, **characterised in that** the fastening device (20; 58) can serve for fastening of the component.

2. Spacer according to claim 1, **characterised in that** the tube (19) has an annular cross-section.

3. Spacer according to claim 1, **characterised in that** the fastening device (20, 58) has a cover, which is arranged at the component end of the spacer (10).

4. Spacer according to claim 3, **characterised in that** the cover (20) has a honeycomb structure (28).

5. Spacer according to claim 1, **characterised in that** the spacer (10) has two or more tubes (19) arranged parallel to one another, which are connected to one another at their ends which are remote from the masonry.

6. Method of fastening a spacer (10) in the shape of a circular tube, in accordance with one of claims 1 to 5, to masonry (16) of a wall (14) provided with an insulating layer (12), **characterised in that** an annular channel extending to the masonry (16) is made in the insulating layer (12); **in that** the spacer (10) in the shape of a circular tube is inserted into the channel in the insulating layer (12); and **in that** the spacer (10) is connected to the masonry (16) using a tension anchor (56), the tension anchor (56) acting on that end of the spacer (10) which is remote from the masonry.

7. Method according to claim 6, **characterised in that** the annular channel is continued into the masonry (16).

8. Method according to claim 6, **characterised in that** the insulating layer (12), or stucco (18) applied on top of the insulating layer (12), is provided with a counterbore in which a cover (20) arranged at that end of the spacer (10) which is remote from the masonry comes to lie.

## Revendications

1. Entretoise (10) pour la fixation d'un composant à un mur (14) présentant une couche isolante (12), l'entretoise (10) présentant un tube (19) avec un dispositif de fixation (20 ; 58) pour fixer l'entretoise (10) à une maçonnerie (16) du mur (14), et le dispositif de fixation (20 ; 58) étant disposé à une extrémité de l'entretoise (10) opposée à la maçonnerie et le tube de l'entretoise pouvant prendre appui avec sa face avant, sur tout son périmètre, sur le fond d'une encoche dans la maçonnerie, **caractérisée en ce que** le dispositif de fixation (20 ; 58) peut servir à la fixation du composant.

2. Entretoise selon la revendication 1, **caractérisée en ce que** le tube (19) présente une section de forme circulaire.

3. Entretoise selon la revendication 1, **caractérisée en ce que** le dispositif de fixation (20 ; 58) présente un couvercle qui est placé sur l'extrémité de l'entretoise (10) côté composant.

4. Entretoise selon la revendication 3, **caractérisée en ce que** le couvercle (20) présente une structure à alvéoles (28).

5. Entretoise selon la revendication 1, **caractérisée en ce que** l'entretoise (10) présente deux ou plusieurs tubes (19) disposés parallèlement les uns par rapport aux autres et qui sont rattachés les uns aux autres au niveau de leurs extrémités opposées à la maçonnerie.

6. Procédé de fixation d'une entretoise (10) de forme tubulaire selon l'une des revendications 1 à 5 à une maçonnerie (16) d'un mur (14) présentant une couche isolante (12), **caractérisé en ce qu'**une encoche de forme circulaire, allant jusque dans la maçonnerie (16), est prévue dans la couche isolante (12), **en ce que** l'entretoise tubulaire (10) est logée dans l'encoche de la couche isolante (12), et **en ce que** l'entretoise (10) est rattachée à la maçonnerie (16) à l'aide d'un tirant d'ancrage (56), le tirant d'ancrage (56) étant appliqué à l'extrémité de l'entretoise (10) opposée à la maçonnerie.

7. Procédé selon la revendication 6, **caractérisé en ce que** l'encoche de forme circulaire se poursuit jusque dans la maçonnerie (16).

8. Procédé selon la revendication 6, **caractérisé en ce que** la couche isolante (12) ou un crépi (18) appliqué sur la couche isolante (12) est doté(e) d'un chanfrein dans lequel vient prendre appui un couvercle (20) disposé sur l'extrémité de l'entretoise (10) opposée à la maçonnerie.
